# EUROPEAN PATENT APPLICATION

(11) **EP 4 827 052 A1**
(43) Date of publication of application: **21.10.2026**
(21) Application number: 26171712.8
(22) Date of filing: 10.04.2026
(51) Int. Cl.: H04L 9/40

(54) **SYSTEMS AND METHODS FOR DETECTING MALICIOUS WEB ADDRESSES**

(30) Priority: 16.04.2025 US 202519180805
(71) Applicant: Capital One Services, LLC, McLean, Virginia 22102 (US)
(72) Inventor: MOSELEY, Travis W., Chesterfield (US); ZHOU, Gang, Midlothian (US); POSILKIN, Mason, Deerfield (US); FLAHERTY, Kyle, Richmond (US); SHIMIZU, Atsuyo, Falls Church (US); DUKEWICH, John, Philadelphia (US); BARRY, Ryan, Columbus (US)
(74) Representative: Boult Wade Tennant LLP

(57) **Abstract**

Systems and methods for detecting malicious web addresses are disclosed. The method may include receiving one or more flagged web addresses, determining one or more attributes of the one or more flagged web addresses, and generating, based on the one or more attributes, a data set comprising one or more correlated web addresses, each of the one or more the correlated web addresses including at least one attribute in common with at least one of the one or more flagged web addresses. Additionally, the method may include performing one or more test interactions with one or more of the one or more correlated web addresses, generating, based on the one or more test interactions, a risk factor for each of the one or more correlated web addresses, and blocking future interactions at each of the one or more correlated web addresses having a risk factor above a predetermined threshold.

## Description

### TECHNICAL FIELD

The present disclosure relates generally to the field of cyber security. In particular, the present disclosure relates to detecting malicious web addresses.

### BACKGROUND

Scam websites are malicious or deceptive online platforms designed to mislead or defraud unsuspecting users. These websites often exploit vulnerabilities in user behavior, web technologies, and trust mechanisms to steal sensitive personal information, financial data, or to deceive users into paying for goods or services that are misrepresented or may not exist.

Given the widespread impact of scam websites on individuals and organizations, it has become essential to develop robust systems and methods that can effectively detect, prevent, and mitigate the impact of websites that engage in these deceptive activities. Scam websites not only lead to significant financial losses but also pose substantial risks to users' personal and sensitive information.

Current systems and methods for identifying and combating scam websites rely heavily on reactive measures, such as manual reporting by users or website owners. Frequently, users fail to report scam websites, resulting in financial loss to the users and the financial institutions and card services that provide payments to the scam websites, and without recourse or knowledge of the scam website by the entities that may address the issue. As such, conventional systems and techniques may fail to detect a scam website before a user experiences a financial loss or has divulged personal or sensitive information.

This disclosure is directed to addressing one or more challenges such as the above. The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY

According to certain aspects of the disclosure, methods and systems are disclosed for detecting malicious web addresses and, more particularly, to systems and methods for detecting malicious web addresses by correlation with flagged web addresses.

In one aspect, an exemplary embodiment of a computer-implemented method of detecting malicious web addresses may include: receiving, by one or more processors, one or more flagged web addresses; determining, by the one or more processors, one or more attributes of the one or more flagged web addresses; generating, by the one or more processors and based on the one or more attributes of the one or more flagged web addresses, a data set comprising one or more correlated web addresses, each of the one or more the correlated web addresses including at least one attribute in common with at least one of the one or more flagged web addresses; performing, by the one or more processors, one or more test interactions with one or more of the one or more correlated web addresses; generating, by the one or more processors and based on the one or more test interactions, a risk factor for each of the one or more correlated web addresses; and blocking, by the one or more processors, future interactions at each of the one or more correlated web addresses having a risk factor above a predetermined threshold.

In another aspect, an exemplary embodiment of a system may include: at least one processor; and at least one memory having programming instructions stored thereon, which, when executed by the at least one processor, cause the system to perform operations comprising: receiving one or more flagged web addresses; determining one or more attributes of the one or more flagged web addresses; generating, based on the one or more attributes of the one or more flagged web addresses, a data set comprising one or more correlated web addresses, each of the one or more the correlated web addresses including at least one attribute in common with at least one of the one or more flagged web addresses; performing one or more test interactions with each of the one or more correlated web addresses; generating, based on the one or more test interactions, a risk factor for each of the one or more correlated web addresses; and blocking future interactions at each of the one or more correlated web addresses having a risk factor above a predetermined threshold.

In a further aspect, an exemplary embodiment of a computer-implemented method of using a trained machine-learning model to detect malicious web addresses may include: receiving, by one or more processors, one or more flagged web addresses; determining, by the one or more processors and the trained machine-learning model, one or more attributes of the one or more flagged web addresses; generating, by the trained machine-learning model and based on the one or more attributes of the one or more flagged web addresses, one or more correlated web addresses, each of the one or more the correlated web addresses including at least one attribute in common with at least one of the one or more flagged web addresses; determining, by the one or more processors, a risk factor for each of the one or more correlated web addresses; and blocking, by the one or more processors, future interactions at each of the one or more correlated web addresses having a risk factor above a predetermined threshold.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 is a diagram showing an exemplary architecture diagram for detecting malicious web addresses, according to one or more embodiments.
FIG. 2 is an exemplary flowchart of a computer-implemented or computer-based method for detecting malicious web addresses, according to one or more embodiments.
FIG. 3 shows an exemplary machine-learning training flow chart, according to certain aspects of the disclosure.
FIG. 4 illustrates an implementation of an exemplary computer system that executes techniques presented herein.

The figures depict preferred embodiments for purposes of illustration only. One skilled in the art will readily recognize from the following discussion that alternative embodiments of the systems and methods illustrated herein may be employed without departing from the principles of the invention described herein.

### DETAILED DESCRIPTION

The present embodiments may relate to systems and methods that may solve technical challenges by providing systems and methods for detecting malicious web addresses, e.g., by receiving one or more flagged web addresses and determining one or more attributes of the one or more flagged web addresses to generate, based on the one or more attributes of the one or more flagged web addresses, a data set comprising one or more correlated web addresses, each of the one or more the correlated web addresses including at least one attribute in common with at least one of the one or more flagged web addresses. The one or more correlated web addresses may then be subjected to one or more test interactions to generate, based on the one or more test interactions, a risk factor for each of the one or more correlated web addresses. If the risk factor for a given correlated web address exceeds a predetermined threshold, future interactions at the correlated web address may be blocked.

Reference to any particular activity is provided in this disclosure only for convenience and not intended to limit the disclosure. A person of ordinary skill in the art would recognize that the concepts underlying the disclosed devices and methods may be utilized in any suitable activity. The disclosure may be understood with reference to the following description and the appended drawings, wherein like elements are referred to with the same reference numerals.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. The term "or" is used disjunctively, such that "at least one of A or B" includes, (A), (B), (A and A), (A and B), etc. Relative terms, such as, "substantially," "approximately," "about," and "generally," are used to indicate a possible variation of ±10% of a stated or understood value.

It will also be understood that, although the terms first, second, third, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Terms like "provider," "merchant," "vendor," or the like generally encompass an entity or person involved in providing, selling, or renting items to persons such as a seller, dealer, renter, merchant, vendor, or the like, as well as an agent or intermediary of such an entity or person. An "item" generally encompasses a good, service, or the like having ownership or other rights that may be transferred. As used herein, terms like "user" or "customer" generally encompasses any person or entity that may desire information, resolution of an issue, purchase of a product, or engage in any other type of interaction with a provider. An "interaction" generally encompasses an act or action involving transfer of funds or an item between a provider and a user. The term "browser extension" may be used interchangeably with other terms like "program," "electronic application," or the like, and generally encompasses software that is configured to interact with, modify, override, supplement, or operate in conjunction with other software or devices.

As used herein, a "machine-learning model" generally encompasses instructions, data, or a model configured to receive input, and apply one or more of a weight, bias, classification, or analysis on the input to generate an output. The output may include, for example, a classification of the input, an analysis based on the input, a design, process, prediction, or recommendation associated with the input, or any other suitable type of output. A machine-learning model is generally trained using training data, e.g., experiential data or samples of input data, which are fed into the model in order to establish, tune, or modify one or more aspects of the model, e.g., the weights, biases, criteria for forming classifications or clusters, or the like. Aspects of a machine-learning model may operate on an input linearly, in parallel, via a network (e.g., a neural network), or via any suitable configuration. By virtue of such training, a machine-learning model is converted from an un-trained and un-specific model to a model that is unique to and specifically configured for the particular purpose for which it is trained. In an example, training of a machine-learning model is analogous to a method of production in which the article produced is the trained model having unique characteristics by virtue of its particular training. Moreover, the result of training a machine-learning model using particular training data and for a particular purpose results in a technical solution to an inherently technical problem.

The execution of the machine-learning model may include deployment of one or more machine-learning techniques, such as linear regression, logistical regression, random forest, gradient boosted machine (GBM), deep learning, or a deep neural network. Supervised or unsupervised training may be employed. For example, supervised learning may include providing training data and labels corresponding to the training data, e.g., as ground truth. Unsupervised approaches may include clustering, classification or the like. K-means clustering or K-Nearest Neighbors may also be used, which may be supervised or unsupervised. Combinations of K-Nearest Neighbors and an unsupervised cluster technique may also be used. Any suitable type of training may be used, e.g., stochastic, gradient boosted, random seeded, recursive, epoch or batch-based, etc.

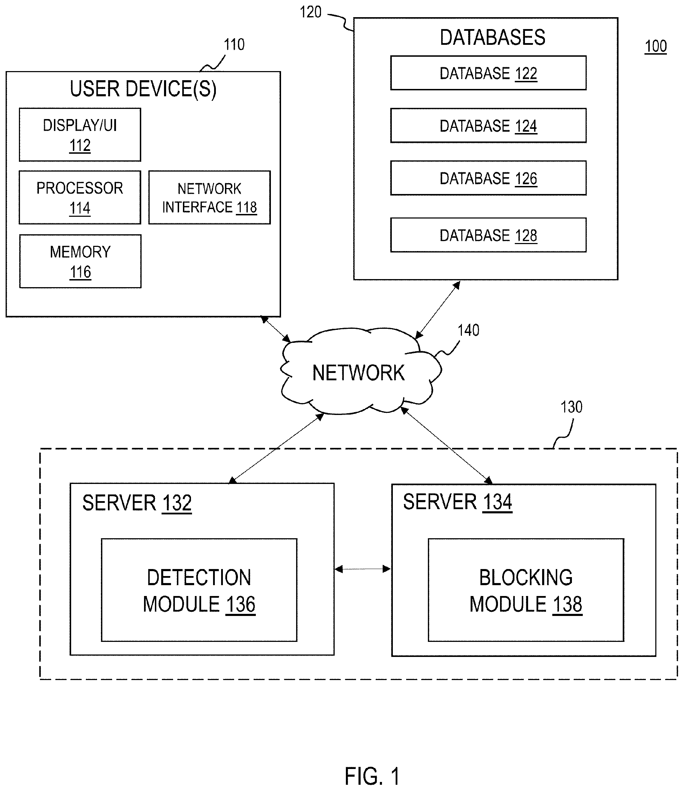

FIG. 1 depicts an exemplary computing environment 100 that may be utilized with techniques presented herein. As shown, one or more user devices 110, one or more databases 120, and a server system 130 may communicate with one another across (e.g., via) a network 140.

The user device 110 (e.g., a user device 110 of the one or more user devices 110) may include a display 112, a processor 114, a memory 116, and a network interface 118. The user device 110 may be a mobile device, such as a smartphone, a cell phone, a tablet, a laptop computer, etc., a desktop computer, or the like. The user device 110 may execute, by the processor 114, one or more instructions stored in the memory 116 to, e.g., report a malicious web address, perform a test interaction on a web address, or train or use one or more machine-learning models to generate correlated web addresses, as described elsewhere herein. One or more components of the user device 110 may generate, or may cause to be generated, one or more graphic user interfaces (GUls) based on instructions/information stored in the memory 116, instructions/information received from the servers 130, or the like and may cause the GUIs to be displayed via the display 112. The GUIs may be, e.g., mobile application interfaces or browser user interfaces and may include text, input text boxes, selection controls, or the like. The display 112 may include a touch screen or a display with other input systems (e.g., a mouse, keyboard, etc.) for an operator of the user device 110 to control the functions of the user device 110. The network interface 118 may be a transmission control protocol/Internet protocol (TCP/IP) network interface, or another type of wired or wireless communication interface, for Ethernet or wireless communications with the databases 120 and the server system 130 via the network 140.

In various embodiments, the components of the computing environment 100 are associated with a common entity. In other embodiments, one or more of the components of the environment are associated with a different entity than another. For example, databases 120 may include databases associated with financial institutions, such as databases 122 associated with a cyber security organization of an issuing bank and databases 124 associated with a card provider of an issuing bank, and may further include databases 126 associated with internet service providers (ISPs), and databases 128 associated with other third parties, such as the Financial Services Information Sharing and Analysis Center (FS-ISAC) or National Cyber-Forensics & Training Alliance (NCFTA). The databases 120 may be internal or external to any of the entities, and may be publicly available. The systems and devices of the environment 100 may communicate in any arrangement. As will be discussed herein, systems or devices of the environment 100 may communicate in order to one or more of determine one or more attributes of one or more flagged web addresses, generate a data set of correlated web addresses, each of the correlated web addresses including at least one attribute in common with one or more of the flagged web addresses, determine a risk factor for the correlated web addresses, and block future interactions at each of the web addresses having a risk factor above a predetermined threshold.

Server system 130 may be, for example, one or more third party or auxiliary systems that integrate or communicate with the user devices 110 and databases 120 in performing various tasks related to the techniques disclosed herein. For example, the servers 130 may comprise computer systems associated with a financial institution, a card provider, an internet service provider, or other entities. In the exemplary embodiment, a first server 132 and a second server 134 are included. In other examples, there may be a single server or more than two servers comprising servers 130.

In one instance, server system 130 may include one or more modules, such as a detection module 136 and a blocking module 138. As used herein, terms such as "component" or "module" generally encompass hardware or software, e.g., that a processor or the like uses to implement associated functionality. It is contemplated that the functions of these components are combined in one or more components or performed by other components of equivalent functionality. Detection module 136 and blocking module 138 may be on a same server of the server system 130 or, as depicted in the exemplary embodiment, detection module 136 may be on a first server 132 and the blocking module 138 may be on a second server 134. For example, first server 132 may be a server associated with a cyber security organization of an issuing bank and second server 134 may be associated with a card services organization of the issuing bank. In other examples, first server 132 and second server 134 may be incorporated into a single server or be two servers associated with different entities.

The detection module 136 may be configured to retrieve flagged websites, whether via user input or obtained from any of databases 120, such as databases 122 associated with a financial institution, such as a merchant's bank, databases 124 associated with a card provider, databases 126 associated with internet service providers, and databases 128 associated with other third parties that have an interest in monitoring and blocking interactions at web addresses that may be associated with illegal, fraudulent, or malicious activity. For example, the FS-ISAC and NCFTA maintain databases that include information regarding flagged web addresses and the attributes of the flagged web addresses. For financial institutions and card providers, flagged websites may be used for fraud prevention. The web addresses may be monitored to identify those involved in phishing, money laundering, or fraudulent activities, helping to protect customers from scams and compromised information. ISPs also maintain lists of flagged websites, such as malicious sites that could harm users' devices or accounts. These sites may contain malware or ransomware. Third-party security firms, such as those associated with database 128, may maintain reputation databases of flagged websites. These firms assess the security risks of various sites and share their findings with financial institutions and ISPs to help protect users. The types of websites that are flagged may include phishing sites, which impersonate legitimate websites to steal personal or financial information; malware distribution sites, which spread harmful software; fraudulent e-commerce sites that scam users; and illegal content websites hosting pirated material or other unlawful activities.

The detection module 136 may further be configured to determine one or more attributes of the one or more flagged web addresses. The attributes may include any information associated with a web address that may be used to identify other similar web addresses. As fraudsters and malicious actors typically create malicious ads and websites using a common framework, it is important to identify attributes that may correlate other web addresses with a flagged web address. A non-exhaustive list of examples includes a domain name, an identification value for specific web platforms, such as a pixel ID for use on Meta^{®} related spaces such as Instragram^{™}, and other similar information. A WHOIS search may also be performed on the flagged web addresses to identify attributes associated with the flagged web addresses.

The detection module 136 may further be configured to generate, based on the one or more attributes of the one or more flagged web addresses, a data set comprising one or more correlated web addresses, each of the one or more correlated web addresses including at least one attribute in common with at least one of the one or more flagged web addresses.

The blocking module 138 may be configured to perform one or more test interactions with each of the one or more correlated web addresses. An example test interaction may include attempting to pay for goods or services from the correlated web address and determine if the goods or services are provided and are as advertised. Namely, the test interaction may include determining whether the web address is a legitimate vendor. Other test interactions may include processing a zero charge transaction at the web address, and monitoring the credentials for the test account to determine if the information associated with the account is compromised after the test transaction.

The blocking module 138 may be configured to generate, based on the one or more test interactions, a risk factor for each of the one or more correlated web addresses. Subsequently, the blocking module 138 may be configured to block future interactions at each of the one or more correlated web addresses having a risk factor above a predetermined threshold. The predetermined threshold may be a value set by an administrator or determined by an algorithm or trained machine-learning model.

The server system 130 may be in communication with other device(s) or system(s) in the environment 100 over the network 140. In various embodiments, the network 140 may be a wide area network ("WAN"), a local area network ("LAN"), a personal area network ("PAN"), or the like. In various embodiments, network 140 includes the Internet, and information and data provided between various systems occurs online.

"Online" may mean connecting to or accessing source data or information from a location remote from other devices or networks coupled to the Internet. Alternatively, "online" may refer to connecting or accessing a network (wired or wireless) via a mobile communications network or device. The Internet is a worldwide system of computer networks-a network of networks in which a party at one computer or other device connected to the network can obtain information from any other computer and communicate with parties of other computers or devices. The most widely used part of the Internet is the World Wide Web (often-abbreviated "WWW" or called "the Web"). A "website page" generally encompasses a location, data store, or the like that is, for example, hosted or operated by a computer system so as to be accessible online, and that may include data configured to cause a program such as a web browser to perform operations such as send, receive, or process data, generate a visual display or an interactive interface, or the like.

The server system 130 may include an electronic data system, e.g., a computer-readable memory such as a hard drive, flash drive, disk, etc. In various embodiments, the server system 130 includes or interacts with an application programming interface for exchanging data to other systems, e.g., one or more of the other components of the environment.

The server system 130 may be a computer, system of computers (e.g., rack server(s)), or a cloud service computer system. The server system 130 may store or have access to databases 120 (e.g., hosted on a third-party server or in memory on the server system 130). The servers of server system 130 may include all the features of the user device 110, such as a display/Ul, a processor, a memory, and a network interface. The display/Ul may be a touch screen or a display with other input systems (e.g., mouse, keyboard, etc.) for an operator of the server system 130 to control the functions of the server system 130. The server system 130 may execute, by the processor, an operating system (OS) and at least one instance of a servlet program.

The server system 130 may generate, store, train, or use a machine-learning model, as described above, configured to generate a customized output based upon baseline data, dynamic data, or sensor data. For example, baseline data and account data may be received and stored by server system 130. Baseline data and dynamic data are described in further detail in the method below. Baseline data and dynamic data may include stored baseline data and dynamic data, as well as previous outputs of the machine-learning model(s). The baseline data or dynamic data may be input into the machine-learning model to generate a data set of correlated web addresses based on flagged web addresses.

The server system 130 may include a machine-learning model or instructions associated with the machine-learning model, e.g., instructions for generating a machine-learning model, training the machine-learning model, using the machine-learning model, etc, as described above. The server system 130 may include instructions for customizing outputs based upon baseline data, dynamic data, or sensor data, e.g., based upon the output of the machine-learning model, or operating the display to output an alert, e.g., as adjusted based upon the machine-learning model. The server system 130 may include training data.

In various embodiments, a system or device other than the server system 130 is used to generate or train the machine-learning model. For example, such a system may include instructions for generating the machine-learning model, the training data and ground truth, or instructions for training the machine-learning model. A resulting trained machine-learning model may then be provided to the server system 130.

Generally, a machine-learning model includes a set of variables, e.g., nodes, neurons, filters, etc., that are tuned, e.g., weighted or biased, to different values via the application of training data. In supervised learning, e.g., where a ground truth is known for the training data provided, training may proceed by feeding a sample of training data into a model with variables set at initialized values, e.g., at random, based upon Gaussian noise, a pre-trained model, or the like. The output may be compared with the ground truth to determine an error, which may then be back-propagated through the model to adjust the values of the variable.

Training may be conducted in any suitable manner, e.g., in batches, and may include any suitable training methodology, e.g., stochastic or non-stochastic gradient descent, gradient boosting, random forest, etc. In various embodiments, a portion of the training data may be withheld during training or used to validate the trained machine-learning model, e.g., compare the output of the trained model with the ground truth for that portion of the training data to evaluate an accuracy of the trained model. The training of the machine-learning model may be configured to cause the machine-learning model to learn associations between user literacy, audio output, and assets (e.g., stocks), such that the trained machine-learning model is configured to determine a user's literacy level and provide audio output based upon the learned associations.

In various embodiments, the variables of a machine-learning model may be interrelated in any suitable arrangement in order to generate the output. For example, the machine-learning model may include one or more convolutional neural networks ("CNNs") configured to identify user preferences (e.g., a user literacy level), and may include further architecture, e.g., a connected layer, neural network, etc., configured to determine a relationship between baseline data or dynamic data, such as flagged web addresses and the attributes associated with the flagged web addresses.

Further aspects of the machine-learning model or how it may be utilized to generate a customized output based upon baseline data, dynamic data, sensor data, or other received data may be described in further detail in the method below. In the following method, various acts may be described as performed or executed by a component from FIG. 1, such as the server system 130, the user device 110, or components thereof. However, it should be understood that in various embodiments, various components of the environment 100 discussed below may execute instructions or perform acts including the acts discussed below. An act performed by a device may be considered to be performed by a processor, actuator, or the like associated with that device. Further, it should be understood that in various embodiments, various blocks may be added, omitted, or rearranged in any suitable manner.

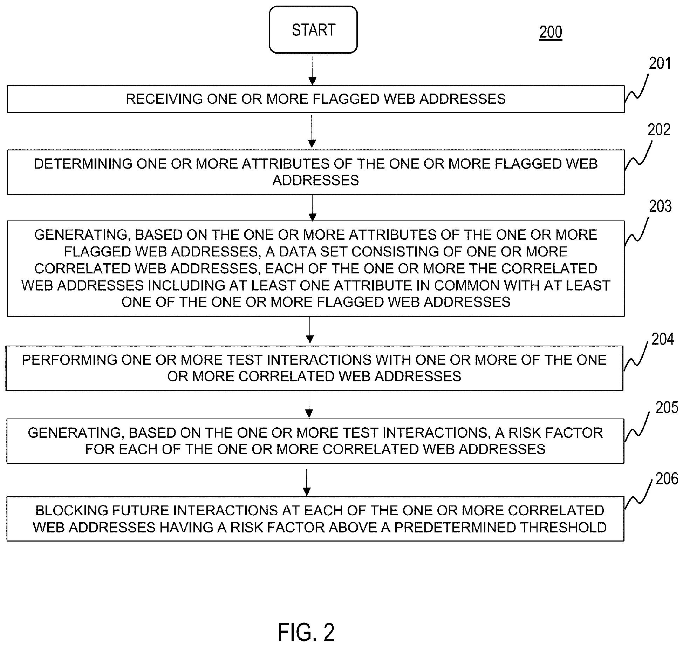

In general, any method or operation discussed in this disclosure that is understood to be computer-implementable, such as the method illustrated in FIG. 2, may be performed by one or more processors of a computer system, such any of the systems or devices in the environment 100 of FIG. 1, as described above. A method or method block performed by one or more processors may also be referred to as an operation. The one or more processors may be configured to perform such processes by having access to instructions (e.g., software or computer-readable code) that, when executed by the one or more processors, cause the one or more processors to perform the processes. The instructions may be stored in a memory of the computer system. A processor may be a central processing unit (CPU), a graphics processing unit (GPU), or any suitable types of processing unit.

A computer system, such as a system or device implementing a method or operation in the examples below, may include one or more computing devices, such as one or more of the systems or devices in FIG. 1. One or more processors of a computer system may be included in a single computing device or distributed among a plurality of computing devices. A memory of the computer system may include the respective memory of each computing device of the plurality of computing devices.

Although depicted as separate components in FIG. 1, it should be understood that a component or portion of a component in the environment 100 may, in various embodiments, be integrated with or incorporated into one or more other components. In various embodiments, operations or aspects of one or more of the components discussed above may be distributed amongst one or more other components. Any suitable arrangement or integration of the various systems and devices of the environment 100 may be used.

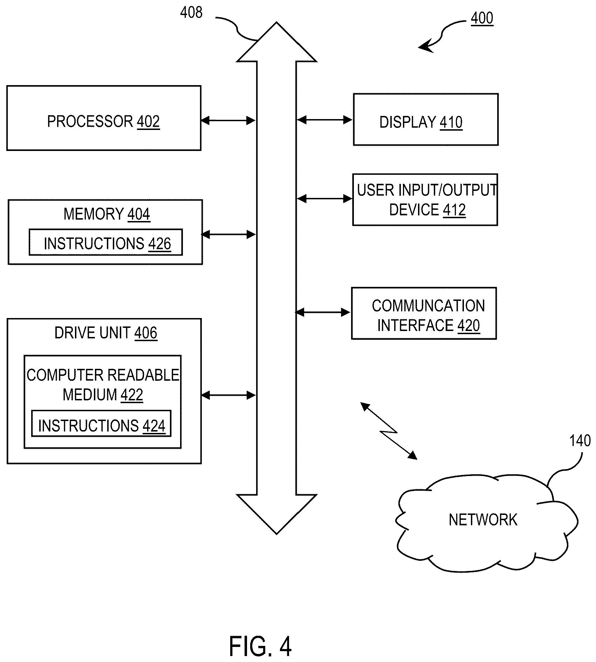

FIG. 2 is an exemplary flowchart of a computer-implemented or computer-based method for detecting malicious web addresses. In one instance, the user devices 110 and the server system 130, alone or in combination, may perform one or more portions of the method 200 and are implemented using, for instance, a chip set including a processor (e.g., processor 402) and a memory (e.g., memory 404) as shown in FIG. 4. As such, the user devices 110 and the server system 130 may be configured to facilitate accomplishing various parts of the method 200, as well as accomplishing embodiments of other processes described herein in conjunction with other components of the environment 100. Although computer-implemented method 200 is illustrated and described as a sequence of actions, operations, or functionality, it is contemplated that various embodiments of the method 200 may be performed in any order or combination and need not include all of the illustrated actions, operations, or functionality.

In step 201, the computer-implemented method 200 may include receiving one or more flagged web addresses. A user may report a fraudulent web address via user device 110, the reporting the fraudulent web address being transmitted to a database 120 or to the server system 130. The reported web address may be automatically flagged as fraudulent based on the user report or may be independently verified as fraudulent before being flagged. The process for independently verifying a web address as fraudulent may be the same as the method that will be described in step 204 and step 205 below.

Flagged web addresses may also be obtained from any of databases 120, such as databases 122 associated with a financial institution, databases 124 associated with a card provider, databases 126 associated with internet service providers, and databases 128 associated with other third parties that have an interest in monitoring and blocking interactions at web addresses that may be associated with illegal, fraudulent, or malicious activity. For financial institutions and card providers, flagged websites may be used for fraud prevention. The web addresses may be monitored to identify those involved in phishing, money laundering, or fraudulent activities, helping to protect customers from scams and compromised information. ISPs also maintain lists of flagged websites, such as malicious sites that could harm users' devices. These sites may contain malware or ransomware. Third-party security firms may maintain reputation databases of flagged websites. These firms assess the security risks of various sites and share their findings with financial institutions and ISPs to help protect users. The types of websites that are flagged may include phishing sites, which impersonate legitimate websites to steal personal or financial information; malware distribution sites, which spread harmful software; fraudulent e-commerce sites that scam users; and illegal content websites hosting pirated material or other unlawful activities.

In step 202, the computer-implemented method 200 may include determining one or more attributes of the one or more flagged web addresses. The attributes may include any information associated with a web address that may be used to identify other similar web addresses. As fraudsters and malicious actors typically create malicious ads and websites using a common framework, it is important to identify attributes that may correlate other web addresses with a flagged web address. A non-exhaustive list of examples includes a domain name, an identification value for specific web platforms, such as a pixel ID for use on Meta^{®} related spaces such as Instragram^{™}, and other similar information.

For example, the flagged web address may be scanned via a Uniform Resource Locator (URL) scanner, such as URLScan to provide attributes including status codes, domain registration details, server IP address, all domains and subdomains contacted by the page, such as third-party scripts and trackers, with HTTP request and response headers, internal and external links, redirect chains, embedded iframes, JavaScript files, cookies set, SSL certificate info, etc. A URL scanner comprises an automated process that navigates to a selected set of pages of a URL like a regular user and records the activity that the page navigation creates. The recorded activity includes the domains and IPs contacted, the resources (JavaScript, CSS, etc.) requested from those domains, as well as additional information about the web address itself.

Advantageously, these scans may be automatically performed using an algorithm or machine-learning model. For example, upon retrieval of one or more flagged web addresses, web crawlers may be used to systematically visit and gather data from the flagged websites. The web crawlers may be programmed to navigate through different webpages and extract useful information, such as the metadata, page content, scripts, and URLs. Crawlers may collect data in real-time or at regular intervals.

A WHOIS search may also be performed on the flagged web addresses to identify attributes associated with the flagged web addresses. WHOIS is a query and response protocol that may be used for querying databases that store an Internet resource's registered users or assignees. These resources include domain names, IP address blocks and autonomous systems, among other information, stored and delivered in a human-readable format. Upon performing a WHOIS search, various details regarding the domain name registration of a web address are typically returned, including information regarding the registrar, including the name of the registrar, the entity responsible for registering the domain, and the contact information for the registrar, such as the registrar's website, phone number, and email address. Furthermore, the WHOIS search may return the registrant's information, which includes the name, organization (if applicable), and contact details such as email address, physical address, and phone number of the individual or entity that owns the domain.

Additionally, the WHOIS search returns the creation date of the domain, signifying when the domain was initially registered. The expiration date is also provided, which indicates when the domain registration is set to expire, after which the domain may become available for registration by another party if it is not renewed. The last updated date is another piece of information included in the WHOIS record, which reflects the most recent modifications made to the domain's registration details, whether those changes involve the registrant's information, domain status, or other relevant factors. The WHOIS search will also return the nameservers associated with the domain, which are responsible for directing internet traffic to the appropriate website or service linked with the domain. In some instances, the WHOIS record may also include the IP addresses corresponding to the domain's nameservers.

Other examples of data sources to search include Advertisement libraries, such as ScamAdviser and other websites that compile lists of flagged web addresses, the Meta^{®} Ads Library, DomainTools, an online web application providing WHOIS search support and other domain search tools, Censys, a tool for finding and monitoring servers on the Internet, and Microsoft^{®} Defender Threat Intelligence (MDTI) which compiles a list of assorted cyberthreats, including potentially fraudulent web addresses. In some examples, the computer-implemented method 200 may include providing a data set comprising the most common attributes found among the flagged web addresses. In the parlance of data analysis, the method may include suggesting pivots based on the identified attributes. This allows a user, such as a fraud analyst, to refine further steps to only the attributes likely to result in correlated web addresses that are also scams, reducing the possibility of false positives and saving on computing resources.

In step 203, the computer-implemented method 200 may include generating, based on the one or more attributes of the one or more flagged web addresses, a data set comprising one or more correlated web addresses, each of the one or more the correlated web addresses including at least one attribute in common with at least one of the one or more flagged web addresses.

In some examples, this may be a list of web addresses with the same domain name as the flagged web address, e.g., all web addresses directing to www.example.com, whether the paths (e.g., example.com/page1 or example.com/page2) are the same or not. In these examples, a correlated web address www.example.com/page2 includes a common attribute with a flagged web address www.example.com/page1. In other examples, the attribute may be any of the other attributes discussed above, or other attributes discovered by a trained machine learning model.

The data set may include correlated web addresses including attributes in common with a plurality of flagged web addresses. For example, www.example.com/page1 and www.fraudulentwebsite.com/page1 may both be flagged web addresses retrieved in step 201. The data set of correlated web addresses may include, for example, www.example.com/page2 and www.fraudulentwebsite.com/page2, for including a domain name in common with one of the flagged web addresses. Furthermore, a URLscan of example.com/page1 may have revealed the use of fake.jpg in the webpage, and WHOIS may have revealed a contact for the registrant of www.fraudulentwebsite.com/page1 as fraudster@scam.com. Then, www.fraudster.com/freeTV may be added to the data set because it also includes fake.jpg in its URLscan, and www.toogoodtobetrue.com/discountgold may be added to the data set because it also includes a registrant with fraudster@scam.com with a contact e-mail. Advantageously, a machine learning model may be trained on information for correlating web addresses to identify patterns that are not readily identifiable otherwise. For example, domain names registered at similar times from similar IP addresses, even if not perfect matches for attributes, may be identified by a trained machine learning model as potentially associated with a common fraudster.

In some examples, the method 200 may include blocking future interactions at all correlated web addresses. However, there may be false positives among the correlated web addresses generated in step 203. As such, the method 200 may include testing the riskiness of the correlated web addresses.

In step 204, the computer-implemented method 200 may optionally include performing one or more test interactions with each of the one or more correlated web addresses. An example test interaction may include attempting to pay for goods or services from the correlated web address and determine if the goods or services are provided and are as advertised. Namely, the test interaction may include determining whether the web address is a legitimate vendor and extracting merchant data that is unable to be extracted via other means or sources, e.g., using a vendor or data sharing with a payment card network or processor. Other test interactions may include processing a zero charge transaction at the web address, and monitoring the credentials for the test account to determine if the information associated with the account is compromised after the test interaction.

In step 205, where a test interaction is performed at step 204, the computer-implemented method 200 may include generating, based on the one or more test interactions, a risk factor for each of the one or more correlated web addresses. Alternatively, in step 205, the computer implemented method 200 may include determining a risk factor for each of the one or more interactions based on a determination of the weighted attributes associated with a correlated web address. For example, a web address that includes many high risk attributes, such as common domain names and registrant information with flagged web addresses, may have a higher risk factor than a correlated web address that includes common embedded images with flagged web addresses.

The risk factor may be a value on a scale within a range of values, such as on a scale of 0-10 or a scale of 0-100, or the risk factor may be a binary value, such as 0 for safe or legitimate and 1 for risky or fraudulent, or TRUE for safe or legitimate and FALSE for risky or fraudulent. The risk factor may be based on how many attributes a correlated web address shares with one or more flagged web addresses, or how closely matched the attributes are with one or more flagged web addresses. Furthermore, different attributes may have different weights in determining a risk factor. For example, attributes that correlate strongly with a flagged web address, such as shared domain names, may be weighted more strongly than attributes that correlate less strongly with a flagged web address, such as a shared embedded image.

In step 206, the computer-implemented method 200 may include blocking interactions at to each of the one or more correlated web addresses having a risk factor above a predetermined threshold. The predetermined threshold may be a value set by an administrator or determined by an algorithm or trained machine-learning model. For example, a merchant associated with a risky web address may have transactions between the merchant bank and a financial institution of a user blocked. The issuing bank of a transaction card of a user may decline to authorize transactions attempted with the merchant.

As such, this disclosure's method of detecting risky web addresses and blocking interactions at risky web addresses provides a technical solution to the technical problem of providing cyber security protection and identifying and preventing cyber fraud and scams.

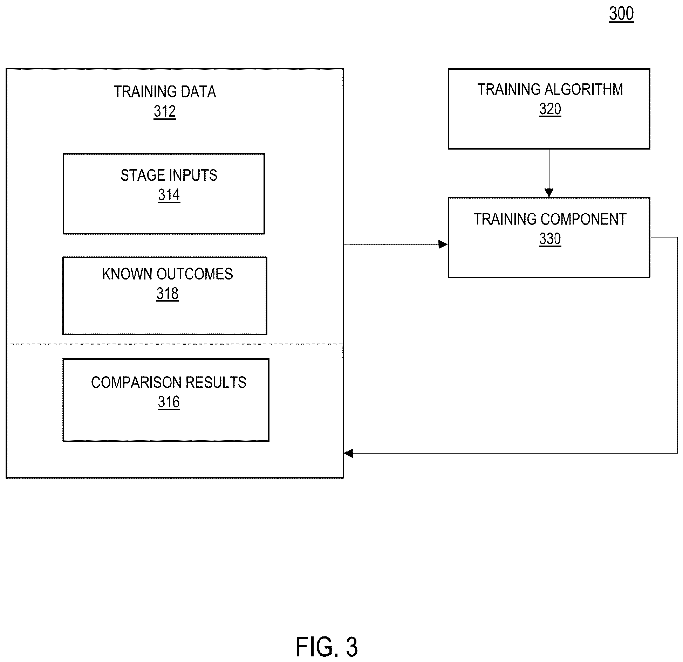

One or more implementations disclosed herein include or may be implemented using a machine-learning model. For example, one or more modules described with respect to environment 100 in FIG. 1 may be implemented using a machine-learning model or may be used to train the machine-learning model. A given machine-learning model may be trained using the data flow 300 of FIG. 3. Training data 312 may include one or more of stage inputs 314 and known outcomes 318 related to the machine-learning model to be trained. The stage inputs 314 may be from any applicable source including text, visual representations, data, values, comparisons, stage outputs, e.g., one or more outputs from one or more actions or operations from FIG.s 1-2. The known outcomes 318 may be included for the machine-learning models generated based upon supervised or semi-supervised training. An unsupervised machine-learning model may not be trained using known outcomes 318. Known outcomes 318 may include known or desired outputs for future inputs similar to or in the same category as stage inputs 314 that do not have corresponding known outputs.

The training data 312 and a training algorithm 320, e.g., one or more of the modules implemented using the machine-learning model or may be used to train the machine-learning model, may be provided to a training component 330 that may apply the training data 312 to the training algorithm 320 to generate the machine-learning model. According to an implementation, the training component 330 may be provided comparison results 316 that compare a previous output of the corresponding machine-learning model to apply the previous result to re-train the machine-learning model. The comparison results 316 may be used by training component 330 to update the corresponding machine-learning model. The training algorithm 320 may utilize machine-learning networks or models including, but not limited to a deep learning network such as Deep Neural Networks (DNN), Convolutional Neural Networks (CNN), Fully Convolutional Networks (FCN) and Recurrent Neural Networks (RCN), probabilistic models such as Bayesian Networks and Graphical Models, classifiers such as K-Nearest Neighbors, or discriminative models such as Decision Forests and maximum margin methods, models specifically discussed in the present disclosure, or the like.

The machine-learning model used herein may be trained or used by adjusting one or more weights or one or more layers of the machine-learning model. For example, during training, a given weight may be adjusted (e.g., increased, decreased, removed) based upon training data or input data. Similarly, a layer may be updated, added, or removed based upon training data/and or input data. The resulting outputs may be adjusted based upon the adjusted weights or layers.

In general, any method or operation discussed in this disclosure is understood to be computer-implementable, such as the processes illustrated in FIG. 2 may be performed by one or more processors of a computer system as described herein. A method or method action or operation performed by one or more processors may also be referred to as an operation. The one or more processors may be configured to perform such processes by having access to instructions (e.g., software or computer-readable code) that, when executed by one or more processors, cause the one or more processors to perform the processes. The instructions may be stored in a memory of the computer system. A processor may be a central processing unit (CPU), a graphics processing unit (GPU), or any suitable type of processing unit.

A computer system, such as a system or device implementing a method or operation in the examples above, may include one or more computing devices. One or more processors of a computer system may be included in a single computing device or distributed among a plurality of computing devices. One or more processors of a computer system may be connected to a data storage device. A memory of the computer system may include the respective memory of each computing device of the plurality of computing devices.

In general, any method or operation discussed in this disclosure is understood to be computer-implementable, such as the processes illustrated in FIG. 2 and may be performed by one or more processors of a computer system as described herein with respect to FIG. 4. A method or method action or operation performed by one or more (local or remote) processors may also be referred to as an operation. The one or more processors may be configured to perform such processes by having access to instructions (e.g., software or computer-readable code) that, when executed by one or more processors, cause the one or more processors to perform the processes. The instructions may be stored in a (local or remote) memory of the computer system. A processor may be a central processing unit (CPU), a graphics processing unit (GPU), or any suitable type of processing unit.

A computer system, such as a system or device implementing a method or operation in the examples above, may include one or more computing devices. One or more processors of a computer system may be included in a single computing device or distributed among a plurality of computing devices. One or more processors of a computer system may be connected to a data storage device. A memory of the computer system may include the respective memory of each computing device of the plurality of computing devices.

FIG. 4 illustrates an implementation of a computer system that may execute techniques presented herein. The computer system 400 can include a set of instructions that can be executed to cause the computer system 400 to perform any one or more of the methods or computer based functions disclosed herein. The computer system 400 may operate as a standalone device or may be connected, e.g., using a network, to other computer systems or peripheral devices.

Unless specifically stated otherwise, as apparent from the following discussions, it is appreciated that throughout the specification, discussions utilizing terms such as "processing," "computing," "calculating," "determining", "analyzing" or the like, refer to the action or processes of a computer or computing system, or similar electronic computing device, that manipulate or transform data represented as physical, such as electronic, quantities into other data similarly represented as physical quantities.

In a similar manner, the term "processor" may refer to any device or portion of a device that processes electronic data, e.g., from registers or memory to transform that electronic data into other electronic data that, e.g., may be stored in registers or memory. A "computer," a "computing machine," a "computing platform," a "computing device," or a "server" may include one or more processors.

In a networked deployment, the computer system 400 may operate in the capacity of a server or as a client user computer in a server-client user network environment, or as a peer computer system in a peer-to-peer (or distributed) network environment. The computer system 400 can also be implemented as or incorporated into various devices, such as a personal computer (PC), a tablet PC, a personal digital assistant (PDA), a mobile device, a palmtop computer, a laptop computer, a desktop computer, a web appliance, or any other machine capable of executing a set of instructions (sequential or otherwise) that specify actions to be taken by that machine. In a particular implementation, the computer system 400 may be implemented using electronic devices that provide voice, video, or data communication. Further, while the computer system 400 is illustrated as a single system, the term "system" shall also be taken to include any collection of systems or sub-systems that individually or jointly execute a set, or multiple sets, of instructions to perform one or more computer functions.

As illustrated in FIG. 4, the computer system 400 may include a processor 402, e.g., a central processing unit (CPU), a graphics processing unit (GPU), or both. The processor 402 may be a component in a variety of systems. For example, the processor 402 may be part of a standard personal computer or a workstation. The processor 402 may be one or more processors, digital signal processors, application specific integrated circuits, field programmable gate arrays, servers, networks, digital circuits, analog circuits, combinations thereof, or other now known or later developed devices for analyzing and processing data. The processor 402 may implement a software program, such as code generated manually (i.e., programmed).

The computer system 400 may include a memory 404 that can communicate via bus 408. The memory 404 may be a main memory, a static memory, or a dynamic memory. The memory 404 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 404 may include a cache or random-access memory for the processor 402. In alternative implementations, the memory 404 is separate from the processor 402, such as a cache memory of a processor, the system memory, or other memory.

The memory 404 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 404 is operable to store instructions 426 executable by the processor 402. The functions, acts or tasks illustrated in the FIG.s or described herein may be performed by the processor 402 executing the instructions stored in the memory 404. The functions, acts, or tasks are independent of the particular type of instruction set, storage media, processor or processing strategy and may be performed by software, hardware, integrated circuits, firmware, micro-code and the like, operating alone or in combination. Likewise, processing strategies may include multiprocessing, multitasking, parallel processing, and the like.

As shown, the computer system 400 may further include a display 410, such as a liquid crystal display (LCD), an organic light emitting diode (OLED), a flat panel display, a solid-state display, a cathode ray tube (CRT), a projector, a printer or other now known or later developed display device for outputting determined information. The display 410 may act as an interface for the user to see the functioning of the processor 402, or specifically as an interface with the software stored in the memory 404 or in the drive unit 406.

Additionally or alternatively, the computer system 400 may include an input/output device 412 configured to allow a user to interact with any of the components of the computer system 400. The input/output device 412 may be a number pad, a keyboard, or a cursor control device, such as a mouse, or a joystick, touch screen display, remote control, or any other device operative to interact with the computer system 400.

The computer system 400 may also or alternatively include drive unit 406 implemented as a disk or optical drive. The drive unit 406 may include a computer-readable medium 422 in which one or more sets of instructions 424, e.g., software, can be embedded. Further, instructions 424 may embody one or more of the methods or logic as described herein. The instructions 424 may reside completely or partially within the memory 404 or within the processor 402 during execution by the computer system 400. The memory 404 and the processor 402 also may include computer-readable media as discussed above.

In some systems, computer-readable medium 422 includes the set of instructions 424 or receives and executes the set of instructions 424 responsive to a propagated signal so that a device connected to network 140 can communicate voice, video, audio, images, or any other data over the network 140. Further, the set of instructions 424 may be transmitted or received over the network 140 via communication port or interface 420, or using bus 408. The communication port or interface 420 may be a part of the processor 402 or may be a separate component. The communication port or interface 420 may be created in software or may be a physical connection in hardware.

The communication port or interface 420 may be configured to connect with a network 140, external media, the display 410, or any other components in computer system 400, or combinations thereof. The connection with the network 140 may be a physical connection, such as a wired Ethernet connection or may be established wirelessly as discussed below. Likewise, the additional connections with other components of the computer system 400 may be physical connections or may be established wirelessly. The network 140 may alternatively be directly connected to the bus 408.

While the computer-readable medium 422 is shown to be a single medium, the term "computer-readable medium" may include a single medium or multiple media, such as a centralized or distributed database, or associated caches and servers that store one or more sets of instructions. The term "computer-readable medium" may also include any medium that is capable of storing, encoding, or carrying a set of instructions for execution by a processor or that causes a computer system to perform any one or more of the methods or operations disclosed herein. The computer-readable medium 422 may be non-transitory, and may be tangible.

The computer-readable medium 422 can include a solid-state memory such as a memory card or other package that houses one or more non-volatile read-only memories. The computer-readable medium 422 can be a random-access memory or other volatile re-writable memory. Additionally or alternatively, the computer-readable medium 422 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

Computer system 400 may be connected to network 140. The network 140 may define one or more networks including wired or wireless networks. The wireless network may be a cellular telephone network, an 802.10, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 140 may include wide area networks (WAN), such as the Internet, local area networks (LAN), campus area networks, metropolitan area networks, a direct connection such as through a Universal Serial Bus (USB) port, or any other networks that may allow for data communication.

The network 140 may be configured to couple one computing device to another computing device to enable communication of data between the devices. The network 140 may generally be enabled to employ any form of machine-readable media for communicating information from one device to another. The network 140 may include communication methods by which information may travel between computing devices.

The network 140 may be divided into sub-networks. The sub-networks may allow access to all of the other components connected thereto or the sub-networks may restrict access between the components. The network 140 may be a public or private network connection and may include, for example, a virtual private network or an encryption or other security mechanism employed over the public Internet, or the like.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the actions, operations, or functionality of computer-implemented methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

Although the text herein sets forth a detailed description of numerous different embodiments, it should be understood that the legal scope of the invention is defined by the words of the claims set forth at the end of this patent. The detailed description is to be construed as exemplary only and does not describe every possible embodiment, as describing every possible embodiment would be impractical, if not impossible. One could implement numerous alternate embodiments, using either current technology or technology developed after the filing date of this patent, which would still fall within the scope of the claims.

Finally, unless a claim element is defined by expressly reciting the word "means" and a function without the recital of any structure, it is not intended that the scope of any claim element be interpreted based upon the application of 35 U.S.C. § 112(f).

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in exemplary configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (code embodied on a non-transitory, tangible machine-readable medium) or hardware. In hardware, the routines, etc., are tangible units capable of performing certain operations and may be configured or arranged in a certain manner. In exemplary embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC) to perform certain operations). A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments where multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may access the memory device later to retrieve and process the stored output. Hardware modules may also initiate communications with input or output devices, and can operate on a resource (e.g., a collection of information).

The various operations of exemplary methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some exemplary embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of geographic locations.

Unless specifically stated otherwise, discussions herein using words such as processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment may be included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description, and the claims that follow, should be read to include one or at least one and the singular also includes the plural unless it is obvious that it is meant otherwise.

Upon reading this disclosure, those of skill in the art will appreciate still additional alternative structural and functional designs for the approaches described herein. Therefore, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the spirit and scope defined in the appended claims.

The particular features, structures, or characteristics of any specific embodiment may be combined in any suitable manner and in any suitable combination with one or more other embodiments, including the use of selected features without corresponding use of other features. In addition, many modifications may be made to adapt a particular application, situation or material to the essential scope and spirit of the present invention. It is to be understood that other variations and modifications of the embodiments of the present invention described and illustrated herein are possible in light of the teachings herein and are to be considered part of the spirit and scope of the present invention.

While the preferred embodiments of the invention have been described, it should be understood that the invention is not so limited and modifications may be made without departing from the invention. The scope of the invention is defined by the appended claims, and all devices that come within the meaning of the claims, either literally or by equivalence, are intended to be embraced therein.

It is therefore intended that the foregoing detailed description be regarded as illustrative rather than limiting, and that it be understood that it is the following claims, including all equivalents, that are intended to define the spirit and scope of this invention.
Various examples are set out in the following numbered paragraphs (NPs).
NP 1. A method of detecting malicious web addresses comprising: receiving, by one or more processors, one or more flagged web addresses; determining, by the one or more processors, one or more attributes of the one or more flagged web addresses; generating, by the one or more processors and based on the one or more attributes of the one or more flagged web addresses, a data set comprising one or more correlated web addresses, each of the one or more the correlated web addresses including at least one attribute in common with at least one of the one or more flagged web addresses; performing, by the one or more processors, one or more test interactions with one or more of the one or more correlated web addresses; generating, by the one or more processors and based on the one or more test interactions, a risk factor for each of the one or more correlated web addresses; and blocking, by the one or more processors, future interactions at each of the one or more correlated web addresses having a risk factor above a predetermined threshold.
NP 2. The method of NP 1, wherein the one or more flagged web addresses is received based on a user reporting a scam web address.
NP 3. The method of NP 1, wherein the attributes of the one or more flagged web addresses includes one or more of: a domain name, an embedded file, an internet protocol (IP) address, or registrant contact information.
NP 4. The method of NP 1, wherein the test interaction includes initiating a payment to the one or more correlated web addresses.
NP 5. The method of NP 1, wherein the risk factor is a value on a scale of 0 to 100, and the predetermined threshold is determined by a trained machine-learning model to be a value between 0 and 100.
NP 6. The method of NP 1, wherein the risk factor is a binary value, and interactions at correlated web addresses with a risk factor of 1 are blocked.
NP 7. The method of NP 1, wherein the generating, based on the one or more attributes of the one or more flagged web addresses, the one or more correlated web addresses, is generated by a trained machine-learning model.
NP 8. The method of NP 1, wherein the one or more flagged web addresses is received from a database of a financial institution.
NP 9. The method of NP 1, wherein the one or more flagged web addresses is received from a database of a card provider.
NP 10. The method of NP 1, wherein the one or more flagged web addresses is received from a database of an internet service provider.
NP 11. A system comprising: at least one processor; and at least one memory having programming instructions stored thereon, which, when executed by the at least one processor, cause the system to perform operations comprising: receiving one or more flagged web addresses; determining one or more attributes of the one or more flagged web addresses; generating, based on the one or more attributes of the one or more flagged web addresses, a data set comprising one or more correlated web addresses, each of the one or more the correlated web addresses including at least one attribute in common with at least one of the one or more flagged web addresses; performing one or more test interactions with each of the one or more correlated web addresses; generating, based on the one or more test interactions, a risk factor for each of the one or more correlated web addresses; and blocking future interactions at each of the one or more correlated web addresses having a risk factor above a predetermined threshold.
NP 12. The system of NP 11, wherein the one or more flagged web addresses is received based on a user reporting a scam web address.
NP 13. The system of NP 11, wherein the attributes of the one or more flagged web addresses includes one or more of: a domain name, an embedded file, an internet protocol (IP) address, or registrant contact information.
NP 14. The system of NP 11, wherein the test interaction includes initiating a payment to the one or more correlated web addresses.
NP 15. The system of NP 11, wherein the risk factor is a value on a scale of 0 to 100, and the predetermined threshold is determined by a trained machine-learning model to be a value between 0 and 100.
NP 16. A method of using a trained machine-learning model to detect malicious web addresses comprising: receiving, by one or more processors, one or more flagged web addresses; determining, by the one or more processors and the trained machine-learning model, one or more attributes of the one or more flagged web addresses; generating, by the trained machine-learning model and based on the one or more attributes of the one or more flagged web addresses, one or more correlated web addresses, each of the one or more the correlated web addresses including at least one attribute in common with at least one of the one or more flagged web addresses; determining, by the one or more processors, a risk factor for each of the one or more correlated web addresses; and blocking, by the one or more processors, future interactions at each of the one or more correlated web addresses having a risk factor above a predetermined threshold.
NP 17. The method of NP 16, wherein the one or more flagged web addresses is received based on a user reporting a scam web address.
NP 18. The method of NP 16, wherein the attributes of the one or more flagged web addresses includes one or more of: a domain name, an embedded file, an internet protocol (IP) address, or registrant contact information.
NP 19. The method of NP 16, wherein determining, by the one or more processors, the risk factor for each of the one or more correlated web addresses comprises: performing, by the one or more processors, one or more test interactions with one or more of the one or more correlated web addresses; generating, by the one or more processors and based on the one or more test interactions, a risk factor for each of the one or more correlated web addresses.
NP 20. The method of NP 16, wherein the risk factor is a value on a scale of 0 to 100, and the predetermined threshold is determined by a trained machine-learning model to be a value between 0 and 100.

## Claims

1. A method of detecting malicious web addresses comprising:
receiving, by one or more processors, one or more flagged web addresses;
determining, by the one or more processors, one or more attributes of the one or more flagged web addresses;
generating, by the one or more processors and based on the one or more attributes of the one or more flagged web addresses, a data set comprising one or more correlated web addresses, each of the one or more the correlated web addresses including at least one attribute in common with at least one of the one or more flagged web addresses;
performing, by the one or more processors, one or more test interactions with one or more of the one or more correlated web addresses;
generating, by the one or more processors and based on the one or more test interactions, a risk factor for each of the one or more correlated web addresses; and
blocking, by the one or more processors, future interactions at each of the one or more correlated web addresses having a risk factor above a predetermined threshold.

2. The method of claim 1, wherein the one or more flagged web addresses is received based on a user reporting a scam web address.

3. The method of claim 1 or 2, wherein the attributes of the one or more flagged web addresses includes one or more of: a domain name, an embedded file, an internet protocol (IP) address, or registrant contact information.

4. The method of any preceding claim, wherein the test interaction includes initiating a payment to the one or more correlated web addresses.

5. The method of any preceding claim, wherein the generating, based on the one or more attributes of the one or more flagged web addresses, the one or more correlated web addresses, is generated by a trained machine-learning model.

6. The method of any one of claims 1 to 4, wherein the one or more flagged web addresses is received from a database of a financial institution.

7. The method of any one of claims 1 to 4, wherein the one or more flagged web addresses is received from a database of a card provider.

8. The method of any one of claims 1 to 4, wherein the one or more flagged web addresses is received from a database of an internet service provider.

9. A method of using a trained machine-learning model to detect malicious web addresses comprising:
receiving, by one or more processors, one or more flagged web addresses;
determining, by the one or more processors and the trained machine-learning model, one or more attributes of the one or more flagged web addresses;
generating, by the trained machine-learning model and based on the one or more attributes of the one or more flagged web addresses, one or more correlated web addresses, each of the one or more the correlated web addresses including at least one attribute in common with at least one of the one or more flagged web addresses;
determining, by the one or more processors, a risk factor for each of the one or more correlated web addresses; and
blocking, by the one or more processors, future interactions at each of the one or more correlated web addresses having a risk factor above a predetermined threshold.

10. The method of claim 9, wherein the one or more flagged web addresses is received based on a user reporting a scam web address.

11. The method of claim 9 or 10, wherein the attributes of the one or more flagged web addresses includes one or more of: a domain name, an embedded file, an internet protocol (IP) address, or registrant contact information.

12. The method of any one of claims 9 to 11, wherein determining, by the one or more processors, the risk factor for each of the one or more correlated web addresses comprises:
performing, by the one or more processors, one or more test interactions with one or more of the one or more correlated web addresses;
generating, by the one or more processors and based on the one or more test interactions, a risk factor for each of the one or more correlated web addresses.

13. The method of any preceding claim, wherein the risk factor is a value on a scale of 0 to 100, and the predetermined threshold is determined by a trained machine-learning model to be a value between 0 and 100.

14. The method of any one of claims 1 to 12, wherein the risk factor is a binary value, and interactions at correlated web addresses with a risk factor of 1 are blocked.

15. A system comprising:
at least one processor; and
at least one memory having programming instructions stored thereon, which, when executed by the at least one processor, cause the system to perform a method according to any one of the preceding claims.
